# EUROPEAN PATENT APPLICATION

(11) **EP 4 838 683 A1**
(43) Date of publication of application: **11.11.2026**
(21) Application number: 25845164.0
(22) Date of filing: 27.06.2025
(51) Int. Cl.: H01M 50/536, H01M 50/533, H01M 50/538, H01M 50/559, H01M 50/566, H01M 50/107, H01M 50/213, H01M 50/249

(54) **BATTERY CELL AND BATTERY PACK AND VEHICLE INCLUDING SAME**

(30) Priority: 24.07.2024 KR 20240098135; 16.04.2025 KR 20250049719
(71) Applicant: LG Energy Solution, Ltd., Seoul 07335 (KR)
(72) Inventor: KO, Kwang-Hun, Daejeon 34122 (KR); KIM, Do-Gyun, Daejeon 34122 (KR); CHO, Sung-Min, Daejeon 34122 (KR); HWANG, Dong-Sung, Daejeon 34122 (KR)
(74) Representative: Goddar, Heinz J.
(86) International application number: PCT/KR2025/009138
(87) International publication number: WO 2026/023900

(57) **Abstract**

A battery cell according to an embodiment of the present disclosure includes an electrode assembly configured by winding a first electrode and a second electrode with a separator interposed therebetween around a winding axis to define a core and an outer surface, wherein the first electrode includes a first uncoated portion on which an active material layer is not coated along a winding direction, wherein the second electrode includes a second uncoated portion on which an active material layer is not coated along the winding direction, and wherein the first uncoated portion and the second uncoated portion are provided on the same surface of the electrode assembly, a battery housing having an opening formed on one side and configured to receive the electrode assembly through the opening, an upper cover configured to cover the opening of the battery housing, and a cell terminal passing through the upper cover to be exposed to an outside of the upper cover, electrically connected to the second uncoated portion, and configured to be weldable to the second uncoated portion from the outside.

## Description

### TECHNICAL FIELD

The present disclosure relates to a battery cell, and a battery pack and vehicle including the same.

This application is based on and claims priority from Korean Patent Application No. 10-2024-0098135, filed on July 24, 2024, and Korean Patent Application No. 10-2025-0049719, filed on April 16, 2025, with the Korean Intellectual Property Office, the disclosure of which is incorporated herein in its entirety by reference.

### BACKGROUND ART

Secondary batteries, which offer high applicability across product categories and possess electrical characteristics such as high energy density and the like, are widely applied not only to portable devices but also to electric vehicles (EVs) or hybrid electric vehicles (HEVs) that are driven by electric power sources. Such secondary batteries are gaining attention as a new energy source for enhancing environmental sustainability and energy efficiency not only due to their primary advantage of significantly reducing the use of fossil fuels, but also because they generate no by-products from energy usage.

Secondary batteries that are currently widely used include lithium-ion batteries, lithium polymer batteries, nickel-cadmium batteries, nickel-metal hydride batteries, and nickel-zinc batteries. The operating voltage of this unit secondary battery cell, that is, the unit battery cell, is approximately 2.5V to 4.5V. Therefore, when an output voltage higher than this is required, a battery pack may be configured by connecting a plurality of battery cells in series. In addition, a battery pack may be configured by connecting multiple battery cells in parallel depending on the charge/discharge capacity required for the battery pack. Accordingly, the number of battery cells included in the battery pack may be set in various ways depending on the required output voltage or charge/discharge capacity.

Meanwhile, in conventional battery cells, the positive electrode foil tab and negative electrode foil tab of a jellyroll-type electrode assembly are positioned on the upper and lower sides of the battery can, respectively. In conventional battery cells with this structure, since the current of the negative electrode must pass through the entire body of the battery can in the height direction, the internal resistance is increased.

Furthermore, the battery cell with this structure requires an uncoated area for electrode stability in the foil tab direction. However, in conventional battery cells, this connection structure includes uncoated areas that occupy a relatively large volume at upper and lower sides of a battery can, which reduces the available internal volume and is therefore disadvantageous in terms of achieving high energy density.

### DISCLOSURE

### Technical Problem

The present disclosure is designed to solve the problems of the related art, and therefore the present disclosure is directed to reducing the internal resistance of a battery by minimizing the length of the electron movement path.

Furthermore, the present disclosure is also directed to improving energy density by reducing the volume occupied by the uncoated portions of the electrode assembly.

The technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery cell including: an electrode assembly configured by winding a first electrode and a second electrode with a separator interposed therebetween around a winding axis to define a core and an outer surface, wherein the first electrode includes a first uncoated portion on which an active material layer is not coated along a winding direction, wherein the second electrode includes a second uncoated portion on which an active material layer is not coated along the winding direction, and wherein the first uncoated portion and the second uncoated portion are provided on the same surface of the electrode assembly; a battery housing having an opening formed on one side and configured to receive the electrode assembly through the opening; an upper cover configured to cover the opening of the battery housing; and a cell terminal passing through the upper cover to be exposed to an outside of the upper cover, electrically connected to the second uncoated portion, and configured to be weldable to the second uncoated portion from an outside.

In one aspect of the present disclosure, the first uncoated portion and the second uncoated portion may be provided at an upper portion of the electrode assembly in a height direction thereof.

In another aspect of the present disclosure, the first uncoated portion may be electrically connected to the upper cover.

In another aspect of the present disclosure, the first uncoated portion and the upper cover may be coupled by welding to form a weld, and the weld may be formed in an area of the upper cover, excluding an area occupied by the cell terminal.

In another aspect of the present disclosure, the cell terminal may be located on one side relative to the center of the upper cover.

In another aspect of the present disclosure, at least a portion of the first uncoated portion may include a plurality of first segments divided along a winding direction of the electrode assembly, and at least a portion of the second uncoated portion may include a plurality of second segments divided along the winding direction of the electrode assembly, and the first segments and the second segments may be disposed at positions that do not overlap each other along the winding direction.

Preferably, the first segments and the second segments may be spatially separated.

In another aspect of the present disclosure, the electrode assembly may include: a first segment area defined as a bending surface area where the plurality of first segments are bent radially; and a second segment area defined as a bending surface area where the plurality of second segments are bent radially.

In another aspect of the present disclosure, the first segment area may be provided on one side of an upper surface of the electrode assembly, and the second segment area may be provided on the other side of the upper surface of the electrode assembly, which is spaced apart from the one side.

For example, the first segment area and the second segment area may each be configured in a semicircular ring shape.

In another aspect of the present disclosure, the first segment area and the second segment area may be radially disposed on the electrode assembly.

In another aspect of the present disclosure, the first segment area and the second segment area may be alternately disposed on the electrode assembly.

In another aspect of the present disclosure, the first segment area and the second segment area may be arranged in a fan shape.

Meanwhile, the present disclosure is also provide a battery pack including at least one battery cell according to the embodiments described above.

In addition, the present disclosure is also provide a vehicle including at least one battery pack according to the embodiments described above.

### Advantageous Effects

According to the present disclosure, it is possible to reduce the internal resistance of the battery by shortening the electron movement path. This enables the implementation of a low-resistance battery.

In addition, according to the present disclosure, it is possible to improve energy density by reducing the volume occupied by the uncoated portion of the electrode assembly.

Furthermore, according to the present disclosure, the battery housing is not used as a current path, thereby increasing freedom in material selection.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing illustrating a battery cell according to an embodiment of the present disclosure.
FIG. 2 is a top plan view of an electrode assembly according to an embodiment of the present disclosure.
FIG. 3 is a drawing illustrating a first electrode and a second electrode of an electrode assembly according to an embodiment of the present disclosure.
FIG. 4 is a longitudinal cross-sectional view of a battery cell according to an embodiment of the present disclosure.
FIG. 5 is an enlarged view of an area surrounding a cell terminal of a battery cell according to an embodiment of the present disclosure.
FIG. 6 is a top view of an electrode assembly according to another embodiment of the present disclosure.
FIG. 7 is a drawing illustrating a first electrode and a second electrode of the electrode assembly according to the embodiment in FIG. 6.
FIG. 8 is a longitudinal cross-sectional view of a battery cell according to the embodiment in FIG. 6.
FIG. 9 is a top view of an electrode assembly according to another embodiment of the present disclosure.
FIG. 10 is a drawing illustrating a first electrode and a second electrode of the electrode assembly according to the embodiment in FIG. 9.
FIG. 11 is a drawing illustrating a battery pack including the battery cell in FIG. 1.
FIG. 12 is a drawing illustrating a vehicle including the battery pack in FIG. 11.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations disclosed in the embodiments and drawings herein are merely most preferable embodiments of the present disclosure, and does not represent the entire concept of the present disclosure, so it should be understood that various equivalents and modifications could be made thereto at the time of filing the present disclosure.

In addition, for purposes of better understanding the present disclosure, the accompanying drawings are not necessarily drawn to scale, and the dimensions of certain elements may be exaggerated for clarity. In addition, the same reference numerals may indicate the same elements across different embodiments.

Stating that two elements are the same indicates that they are "substantially the same." Therefore, the term "substantially the same" may encompass variations that are considered minor in the art, such as a deviation of less than about 5%. In addition, a parameter described as being uniform in a certain area may be understood to mean that it is uniform on average, rather than being strictly uniform at every point.

Although "first," "second," etc. are used to describe various elements, these elements are not limited to these terms. These terms are only used to distinguish one element from another element, and unless otherwise stated, a first element may also be a second element.

Throughout the specification, unless otherwise stated, each element may include a single or a plurality of elements.

Configuration in which an element is disposed "at the upper (or lower) portion" or "at the top (or bottom)" of a target element may indicate that the element may be disposed in contact with the upper (or lower) surface of the target element and that another element may be interposed between the target element and the element disposed at the top (or bottom) of the target element.

Additionally, the expression "an element is 'connected,' 'coupled,' or 'fastened' to another element" should be understood that the two elements may be directly connected or coupled to each other, and that another element may be "interposed" between the two elements, or that the two elements may be "connected," "coupled," or "fastened" via another element.

Throughout the specification, unless otherwise stated, the expression "A and/or B" may refer to A, B, or both A and B, and the expression "C to D" may refer to a range including values equal to or greater than C and equal to or less than D.

For convenience of explanation, in this specification, the longitudinal direction of a winding axis of an electrode assembly 10 wound in a jellyroll shape will be referred to as an "axial direction." In addition, the direction surrounding the winding axis will be referred to as a "circumferential direction." In addition, the direction approaching or moving away from the winding axis will be referred to as a "radial direction." Among these, the direction approaching the winding axis is called a "centripetal direction," and the direction moving away from the winding axis is called a "centrifugal direction."

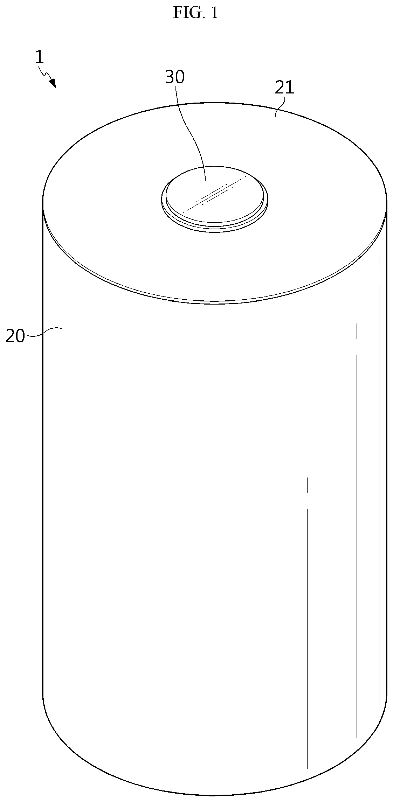

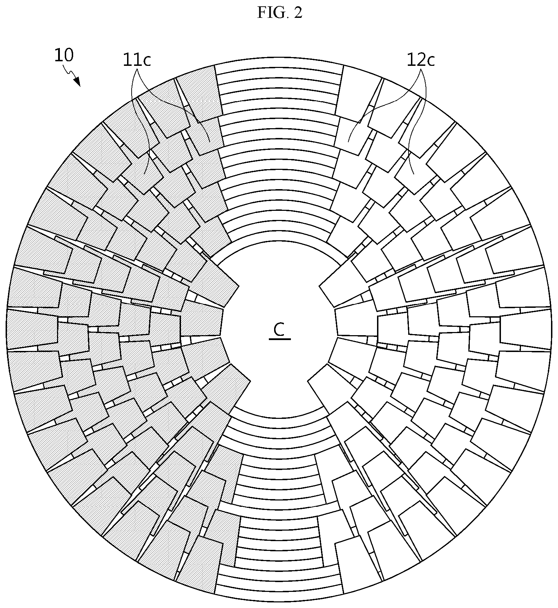

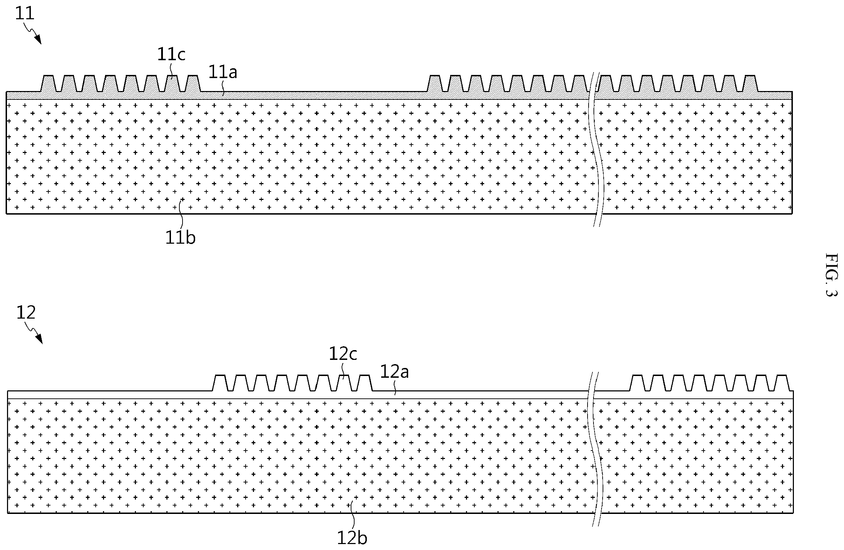

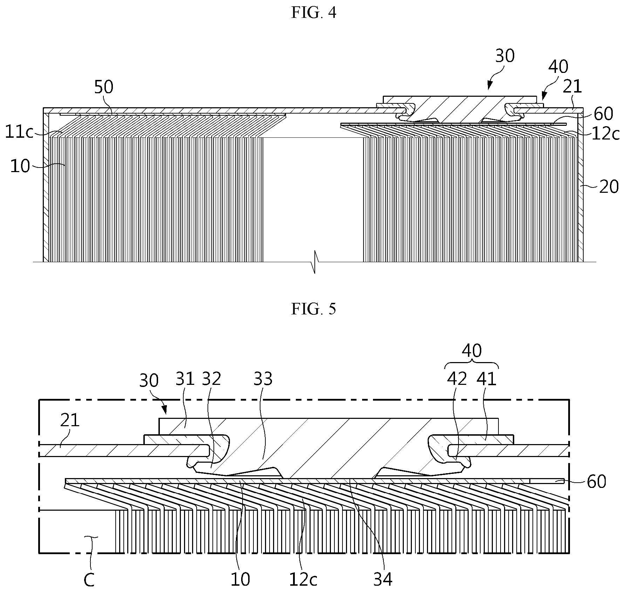

FIG. 1 is a drawing illustrating a battery cell 1 according to an embodiment of the present disclosure, FIG. 2 is a top plan view of an electrode assembly 10 according to an embodiment of the present disclosure, FIG. 3 is a drawing illustrating a first electrode 11 and a second electrode 12 of an electrode assembly 10 according to an embodiment of the present disclosure, and FIG. 4 is a longitudinal cross-sectional view of a battery cell 1 according to an embodiment of the present disclosure.

Referring to FIGS. 1 to 4, a battery cell 1 according to an embodiment of the present disclosure may be, for example, a cylindrical battery cell 1. The battery cell 1 includes an electrode assembly 10, a battery housing 20, an upper cover 21, and a cell terminal 30.

In addition to the aforementioned components, the battery cell 1 may further include an insulating gasket 40, a first current collector 50, a second current collector 60, and/or a lead tab 80. The present disclosure is not limited to a specific shape of the battery and is applicable to batteries in other shapes, such as prismatic batteries.

Referring to FIGS. 2 and 3, the electrode assembly 10 includes a first electrode 11 having a first polarity, a second electrode 12 having a second polarity, and a separator interposed between the first electrode 11 and the second electrode 12. The first electrode 11 corresponds to a negative or positive electrode, and the second electrode 12 corresponds to an electrode having a polarity opposite that of the first electrode 11.

The electrode assembly 10 may have, for example, a jelly-roll structure. That is, the electrode assembly 10 may be manufactured by forming a laminate by stacking, at least once, a sheet-shaped first electrode plate and second electrode plate with a separator interposed therebetween, and winding the laminate in one direction around a winding center C.

The first electrode 11 includes a first electrode plate, and a first electrode active material 11b applied to one or both surfaces of the first electrode plate. The first electrode 11 includes a first uncoated portion 11a on which an active material layer is not coated along the winding direction. That is, an uncoated portion, to which the first electrode active material 11b is not applied, is provided at one end of the first electrode plate in the width direction (parallel to the Z-axis). The uncoated portion, which functions as a first electrode tab, will hereinafter be referred to as a first uncoated portion 11a. The first uncoated portion 11a may be provided at an upper portion of the electrode assembly 10, which is stored inside a battery housing 20, in the height direction (parallel to the Z-axis). That is, the first electrode plate includes a first uncoated portion 11a, on which an active material layer is not coated, provided at a long side end and exposed to the outside of the separator, and a portion of the first uncoated portion 11a is used as an electrode tab itself. The first uncoated portion 11a may be, for example, a negative electrode tab.

At least a portion of the first uncoated portion 11a may include a plurality of first segments 11c divided along the winding direction of the electrode assembly 10. In this case, the plurality of first segments 11c may be bent along a radial direction of the electrode assembly 10. The plurality of first segments 11c, which are bent, may overlap each other in multiple layers.

The second electrode 12 includes a second electrode plate, and a second electrode active material 12b applied to one or both surfaces of the second electrode plate. An uncoated portion on which the second electrode active material 12b is not applied is provided at one end of the second electrode plate in the width direction (parallel to the Z-axis). The uncoated portion, which functions as a second electrode tab, will hereinafter be referred to as a second uncoated portion 12a. The second uncoated portion 12a may be provided at the upper portion of the electrode assembly 10, which is stored inside the battery housing 20, in the height direction (parallel to the Z-axis). That is, the second electrode plate includes a second uncoated portion 12a, on which an active material layer is not coated, provided at a long side end and exposed to the outside of the separator, and at least a portion of the second uncoated portion 12a is used as an electrode tab itself. The second uncoated portion 12a may be, for example, a positive electrode tab.

At least a portion of the second uncoated portion 12a may include a plurality of second segments 12c divided along the winding direction of the electrode assembly 10. In this case, the plurality of second segments 12c may be bent along the radial direction of the electrode assembly 10. The plurality of second segments 12c, which are bent, may be overlap each other in multiple layers.

In the present disclosure, any active material known in the art may be used without limitation as the positive electrode active material coated on the positive electrode plate and the negative electrode active material coated on the negative electrode plate.

In one aspect of the present disclosure, the first uncoated portion 11a and the second uncoated portion 12a may be provided on the same surface of the electrode assembly 10. Preferably, the first uncoated portion 11a and the second uncoated portion 12a may be provided at the upper portion of the electrode assembly 10 in the height direction. That is, the first uncoated portion 11a and the second uncoated portion 12a may be provided on the upper surface of the electrode assembly 10.

Preferably, the first segment 11c and the second segment 12c may extend in the same direction along the height direction (parallel to the Z-axis) of the battery cell 1. The first segment 11c and the second segment 12c may extend toward the upper cover 21.

This configuration enables the implementation of a low-resistance battery. For example, in a conventional cylindrical battery cell 1, electrons are transported through the outer wall of the battery housing 20. That is, the battery housing 20 itself functions as a negative electrode terminal and a passage for electrons. In this case, the negative electrode tab extends from the opposite side of the positive electrode tab along the battery housing 20 to the surface of the battery housing 20 where the positive electrode terminal is located. This structure has the disadvantage of increasing the electron travel distance, thereby increasing the internal resistance of the battery. In addition, the influence of the battery housing 20 on the internal resistance of the battery accounts for approximately 40% of the internal resistance of a cylindrical battery, which is the largest proportion. However, the present disclosure, unlike conventional battery cell structures, has a negative electrode terminal and a positive electrode terminal that are located in the same direction to shorten the electron movement path, thereby implementing a low-resistance battery cell 1.

In addition, in this configuration, the uncoated portions are positioned only at the upper portion of the electrode assembly, and not at the lower portion thereof. Therefore, the volume occupied by the uncoated portions of the electrode assembly is reduced compared to conventional designs, thereby improving energy density. Furthermore, according to the present disclosure, the battery housing 20 is not used as a current path, thereby increasing freedom in material selection.

In another aspect of the present disclosure, the first uncoated portion 11a may be electrically connected to the upper cover 21. For example, the first uncoated portion 11a and the upper cover 21 may be coupled by welding to form a weld. In this case, the weld may be formed in an area of the upper cover 21, excluding the area occupied by the cell terminal 30. Therefore, the upper cover 21 may function as a first electrode terminal.

Referring to FIG. 4, the cell terminal 30 may be positioned on one side relative to the center of the upper cover 21. More specifically, the cell terminal 30 may be positioned offset to one side relative to the center of the upper cover 21.

In this case, the weld between the first uncoated portion 11a and the upper cover 21 may be formed in an area of the upper cover 21, excluding the area occupied by the cell terminal 30. That is, the weld between the first uncoated portion 11a and the upper cover 21 may be positioned on the other side relative to the center of the upper cover 21. Since the weld between the first uncoated portion 11a and the upper cover 21 is formed in the area of the upper cover 21, excluding the area occupied by the cell terminal 30, the weld may be formed over a relatively wide area of the upper cover 21.

With this structure, a wide welding area may be secured between the first uncoated portion 11a and the upper cover 21, thereby effectively reducing the internal resistance of the battery. This enables the implementation of a low-resistance battery.

Referring back to FIGS. 2 and 3, at least a portion of the first uncoated portion 11a may include a plurality of first segments 11c divided along the winding direction of the electrode assembly 10. Preferably, the electrode assembly 10 may include a plurality of groups of first segments 11c along the winding direction. One group of first segments 11c includes a plurality of first segments 11c. In this case, the plurality of groups of first segments 11c may be disposed to be spaced a predetermined distance apart from each other in the winding direction. Preferably, when the first electrode 11 is wound in the winding direction, the first segments 11c may be configured to be disposed offset to one side of the electrode assembly 10. In other words, the first segments 11c may be grouped together on one side of the electrode assembly 10. For example, the first segments 11c may be disposed offset to one side of an imaginary line passing through the center of the electrode assembly 10. For example, referring to FIG. 2, the plurality of first segments 11c may be disposed on the left semicircle based on an imaginary line passing through the center of the electrode assembly 10 when the wound electrode assembly 10 is viewed from above.

At least a portion of the second uncoated portion 12a may include a plurality of second segments 12c divided along the winding direction of the electrode assembly 10. Preferably, the electrode assembly 10 may include a plurality of groups of second segments 12c along the winding direction. One group of second segments 12c includes a plurality of second segments 12c. In this case, the plurality of groups of second segments 12c may be disposed to be spaced at a predetermined distance apart from each other in the winding direction. Preferably, when the second electrode 12 is wound in the winding direction, the second segments 12c may be disposed offset to the other side of the electrode assembly 10. In other words, the second segments 12c may be grouped together on the other side of the electrode assembly 10. Here, the other side refers to the side opposite the side on which the first segments 11c are disposed. For example, the second segments 12c may be disposed offset to the other side based on an imaginary line passing through the center of the electrode assembly 10. For example, referring to FIG. 2, the plurality of second segments 12c may be disposed on the right semicircle based on an imaginary line passing through the center of the electrode assembly 10 when the wound electrode assembly 10 is viewed from above.

Referring to FIGS. 2 and 3, the first segment 11c and the second segment 12c may be disposed at positions that do not overlap each other along the winding direction. For example, a group of first segments 11c and a group of second segments 12c may be disposed at positions that do not overlap each other along the winding direction. That is, the first segment 11c and the second segment 12c may be configured to be spatially separated.

In one aspect of the present disclosure, the plurality of first segments 11c and the plurality of second segments 12c may be bent in the radial direction. Specifically, the plurality of first segments 11c and the plurality of second segments 12c may be bent toward the core. The plurality of first segments 11c and second segments 12c bent toward the core form bending surface areas.

Referring back to FIG. 2, the electrode assembly 10 may include a first segment 11c area defined as a bending surface area where a plurality of first segments 11c are bent radially, and a second segment 12c area defined as a bending surface area where a plurality of second segments 12c are bent radially.

In this case, the first segment 11c area may be provided on one side of the upper surface of the electrode assembly 10, and the second segment 12c area may be provided on the other side of the upper surface of the electrode assembly 10, which is spaced apart from the one side. That is, the first segments 11c may be disposed offset to one side of the electrode assembly 10, and the second segments 12c may be disposed offset to the other side of the electrode assembly 10. For example, in the embodiment shown in FIG. 2, the first segment 11c area and the second segment 12c area may each be provided in a semicircular ring shape. That is, the first segment 11c area and the second segment 12c area may be disposed symmetrically to be spaced apart from each other.

Specifically, based on an imaginary line passing through the center of the electrode assembly 10, the plurality of first segments 11c may be grouped together on the left side of the electrode assembly 10, and the plurality of second segments 12c may be grouped together on the right side of the electrode assembly 10. That is, the plurality of first segments 11c may be configured to be positioned in a semicircular area on one side of the electrode assembly 10. On the other hand, the plurality of second segments 12c may be configured to be positioned in a semicircular area on the other side of the electrode assembly 10. That is, the first segments 11c and the second segments 12c may be configured to be spatially separated. In this case, a predetermined gap may be formed between the plurality of first segments 11c and the plurality of second segments 12c to prevent them from overlapping.

Referring back to FIGS. 1 and 2, the battery housing 20 is a roughly cylindrical container with an opening formed on one side, and is made of a conductive material, such as metal. The battery housing 20 may be made of, for example, steel, stainless steel, or nickel-plated iron. For example, the opening may be provided at the top of the battery housing 20. The lower surface opposite the opening will be referred to as a closed portion. The side wall and the closed portion of the battery housing 20 may be formed integrally. Alternatively, the side wall and the closed portion of the battery housing 20 may be provided separately and then coupled to each other by welding or the like. The upper surface (parallel to the X-Y plane) of the battery housing 20, i.e., the outer surface of the closed portion, may be configured to be substantially flat. The battery housing 20 receives the electrode assembly 10 through the opening formed on one side.

In another aspect of the present disclosure, the opening of the battery housing 20 may be closed by an upper cover 21. That is, the upper cover 21 may be configured to cover the opening of the battery housing 20. The battery housing 20 may be configured in the form of a roughly cylindrical can, and the opening provided at the top may be configured in a roughly circular shape. Therefore, the upper cover 21 may be configured in the form of a roughly circular plate.

In another aspect of the present disclosure, a cell terminal 30 may be mounted on the upper cover 21. That is, a hole for inserting the cell terminal 30 may be provided on the upper cover 21. The cell terminal 30 will be described in detail below with reference to FIGS. 4 and 5.

FIG. 5 is an enlarged view of an area surrounding a cell terminal 30 of a battery cell 1 according to an embodiment of the present disclosure.

Referring to FIGS. 4 and 5, the cell terminal 30 is made of a conductive metal material. The cell terminal 30 may be made of aluminum (Al). In a case where the cell terminal 30 is made of aluminum, 10-series aluminum having relatively low electrical resistance may be used. The cell terminal 30 may be electrically connected to the second uncoated portion 12a of the electrode assembly 10. In this case, the cell terminal 30 has the second polarity. Therefore, the cell terminal 30 may function as a second electrode terminal in the battery cell 1 of the present disclosure.

In another embodiment of the present disclosure, copper (Cu) may be used as the material for the cell terminal 30. In this case, the cell terminal 30 may be electrically connected to the first uncoated portion 11a of the electrode assembly 10. In this case, the cell terminal 30 has the first polarity.

Referring back to FIGS. 4 and 5, the cell terminal 30 may include an exposed terminal portion 31, an inserted terminal portion 32, a terminal connecting portion 33, and a terminal coupling portion 34.

The exposed terminal portion 31 is exposed to the outside of the battery housing 20. The exposed terminal portion 31 may be provided at a position biased to one side of the upper cover 21. The exposed terminal portion 31 may extend substantially parallel to the upper cover 21.

The inserted terminal portion 32 may be configured to be curved toward the inner surface of the upper cover 21. Accordingly, the maximum width of the inserted terminal portion 32 after the riveting process for fixing the cell terminal 30 is performed may be formed larger than the maximum width of the hole formed in the upper cover 21 through which the inserted terminal portion 32 passes.

Referring to FIGS. 4 and 5, the terminal connecting portion 33 may connect the exposed terminal portion 31 and the inserted terminal portion 32. The terminal connecting portion 33 may pass through the upper cover 21. The terminal connecting portion 33 may extend in a direction substantially parallel to the winding axis of the electrode assembly 10.

Referring to FIGS. 4 and 5, the cell terminal 30 includes a terminal coupling portion 34. The terminal coupling portion 34 may be provided on the lower surface of the cell terminal 30. The terminal coupling portion 34 may be provided further inward than the inserted terminal portion 32 in the radial direction. The terminal coupling portion 34 may be subsequently coupled to the second current collector 60 or the second segment 12c by welding. The terminal coupling portion 34 has a flat surface extending approximately horizontally. In addition, the flat surface of the terminal coupling portion 34 extends substantially parallel to the second current collector 60. Therefore, the terminal coupling portion 34 may be configured to come into surface contact with the second current collector 60 having a flat surface. The second current collector 60 may be positioned on the second uncoated portion 12a. More specifically, the second current collector 60 may be configured to be seated on the bending surface area where the second segments 12c of the second uncoated portion 12a are bent. Accordingly, the cell terminal 30 has the same polarity as the second electrode 12 through the second current collector 60.

The cell terminal 30 may be configured to be weldable to the second uncoated portion 12a from the outside. Specifically, the cell terminal 30 may be configured to be weldable to the second current collector 60 or the second uncoated portion 12a from the outside of the battery cell 1.

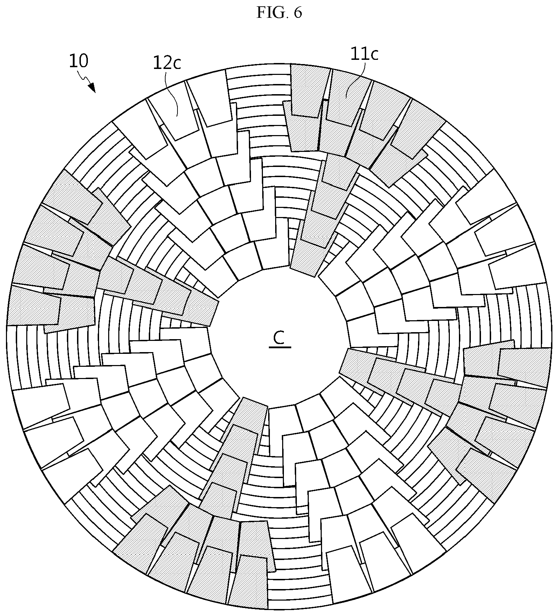

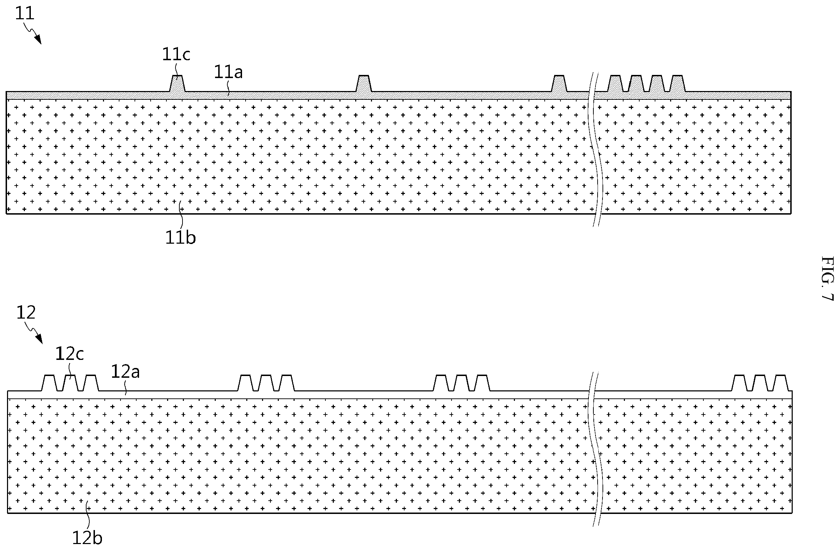

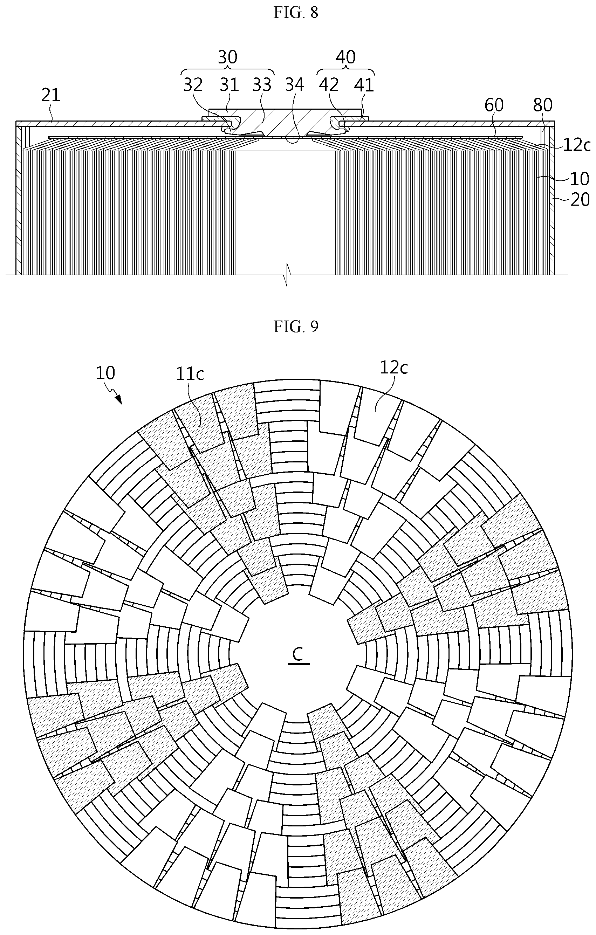

FIG. 6 is a top view of an electrode assembly 10 according to another embodiment of the present disclosure, and FIG. 7 is a drawing illustrating a first electrode 11 and a second electrode 12 of the electrode assembly 10 according to the embodiment in FIG. 6. FIG. 8 is a longitudinal cross-sectional view of a battery cell 1 according to the embodiment in FIG. 6.

Referring to FIG. 6, the first segment 11c area and the second segment 12c area may be radially disposed on the electrode assembly 10. For example, the first segment 11c area and the second segment 12c area may be provided in plurality, and may be arranged in an X shape with respect to the center of the electrode assembly. For example, the second segment 12c areas may be arranged in an X shape, and the first segment 11c areas may be disposed in the remaining areas of the bending surface area, excluding the areas corresponding the X shape.

In order for the first segment 11c areas and the second segment 12c areas to be arranged in an X shape with respect to the center of the electrode assembly, the first segments 11c and the second segments 12c must be disposed so as not to overlap each other, as shown in FIG. 7. For example, the second segment 12c areas forming an X-shape may be configured as sets, each including the same number of segments. On the other hand, the first segment 11c areas forming the remaining areas, excluding the areas corresponding to the X-shape, may be configured as a set of segments that increases.

Referring to FIG. 8, the second current collector 60 may be coupled to the second segment 12c areas forming the X-shape. In this case, the second current collector 60 may be configured in an X-shape or a straight shape. Alternatively, it may be configured in another shape. The second current collector 60 may be electrically connected to the group of second segments 12c. The second current collector 60 may also be electrically connected to the cell terminal 30. In this case, the cell terminal 30 may be located in the central area of the upper cover 21.

The first segment 11c area may be electrically connected to the upper cover 21. In this case, the first segment 11c area may be physically connected to the upper cover 21 by a lead tab 80. The lead tab 80 may extend from the first segment 11c area and come into contact with the inner surface of the upper cover 21.

According to the configuration above, the segments may be uniformly distributed. Therefore, the internal resistance of the battery may be reduced. Specifically, in order for the first segment 11c area and the second segment 12c area to be arranged in an X shape with respect to the center of the electrode assembly, the first segments 11c and the second segments 12c must be disposed so as not to overlap each other, as shown in FIG. 7. In this case, the groups of first segments 11c and the groups of second segments 12c are disposed alternately so as not to overlap each other. That is, the first segments 11c are not biased toward one side of the first electrode 11, and the second segments 12c are likewise not biased toward one side of the second electrode 12. Therefore, according to the above configuration of the present disclosure, the electron travel distance is shortened when electrons move from the electrode to the segments. Accordingly, the internal resistance of the battery is reduced, thereby implementing a low-resistance battery.

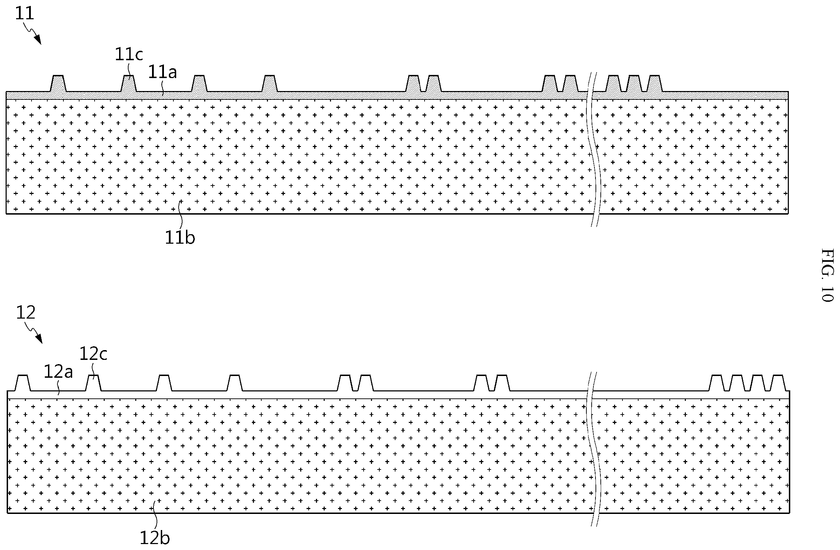

FIG. 9 is a top view of an electrode assembly 10 according to another embodiment of the present disclosure, and FIG. 10 is a drawing illustrating a first electrode 11 and a second electrode 12 of the electrode assembly 10 according to the embodiment in FIG. 9.

Referring to FIG. 9, the first segment 11c areas and the second segment 12c areas may be alternately disposed on the electrode assembly 10. For example, the first segment 11c areas and the second segment 12c areas may be arranged in a fan shape.

In order for the first segment 11c areas and the second segment 12c areas to be alternately disposed in a fan shape, the first segments 11c and the second segments 12c must be disposed so as not to overlap each other, as shown in FIG. 10. For example, the first segment 11c area and the second segment 12c area may be configured as a set of segments, each having an increasing number of segments.

According to this configuration, the segments may be uniformly distributed. Therefore, the internal resistance of the battery may be reduced. Specifically, in order for the first segment 11c areas and the second segment 12c areas to be alternately disposed, the first segments 11c and the second segments 12c must be disposed so as not to overlap each other, as shown in FIG. 10. In this case, the groups of first segments 11c and the groups of second segments 12c are disposed alternately so as not to overlap each other. That is, the first segments 11c are not biased toward one side of the first electrode 11, and the second segments 12c are likewise not biased toward one side of the second electrode 12. Therefore, according to the above configuration of the present disclosure, the electron travel distance is shortened when electrons move from the electrode to the segments. Therefore, the internal resistance of the battery is reduced, thereby implementing a low-resistance battery.

Referring back to FIGS. 1, 2, and 4, an insulating gasket 40 may be provided in the upper cover 21. Specifically, the insulating gasket 40 may be interposed between the upper cover 21 and the cell terminal 30.

The insulating gasket 40 may include an exposed gasket portion 41 and an inserted gasket portion 42. The exposed gasket portion 41 is interposed between the exposed terminal portion 31 of the cell terminal 30 and the upper cover 21. The exposed gasket portion 41 may extend longer than the exposed terminal portion 31 to be exposed to the outside of the exposed terminal portion 31 when the battery cell 1 is viewed from above. That is, the diameter of the exposed gasket portion 41 may be configured to be greater than or equal to the diameter of the exposed terminal portion 31.

The inserted gasket portion 42 is interposed between the inserted terminal portion 32 of the cell terminal 30 and the upper cover 21. The inserted gasket portion 42 may be deformed together with the inserted terminal portion 32 during riveting, thereby coming into close contact with the inner surface of the upper cover 21. The insulating gasket 40 may include, for example, a resin material having insulating and elastic properties. The diameter of the inserted gasket portion 42 may be configured to be greater than or equal to the diameter of the inserted terminal portion 32. Preferably, the inserted gasket portion 42 may be configured to at least partially surround the end of the inserted terminal portion 32. According to this configuration, electrical insulation performance between the upper cover 21 and the cell terminal 30 may be effectively secured.

Referring back to FIG. 4, a first current collector 50 and/or a second current collector 60 may be coupled to the bending surface area of the electrode assembly 10.

Specifically, the battery cell 1 may further include a first current collector 50 configured to be electrically connected to the first electrode 11. The first current collector 50 may be coupled to the first uncoated portion 11a of the electrode assembly 10. Specifically, the first current collector 50 may be coupled to the first segment 11c of the electrode assembly 10. Referring to FIG. 4, the first current collector 50 may be coupled to the top of the electrode assembly 10. The first current collector 50 is made of a conductive metal material and is electrically connected to the first uncoated portion 11a.

The first current collector 50 may be interposed between the first uncoated portion 11a of the electrode assembly 10 and the upper cover 21, thereby electrically connecting the first uncoated portion 11a of the electrode assembly 10 and the upper cover 21.

The battery cell 1 may further include a second current collector 60 configured to be electrically connected to the second electrode 12. The second current collector 60 may be coupled to the second uncoated portion 12a of the electrode assembly 10. Specifically, the second current collector 60 may be coupled to the second segment 12c of the electrode assembly 10. Referring to FIG. 4, the second current collector 60 may be coupled to the top of the electrode assembly 10. The second current collector 60 is made of a conductive metal material and is electrically connected to the second uncoated portion 12a.

The second current collector 60 may be coupled to the cell terminal 30. Specifically, at least a portion of the second current collector 60 may be coupled to the terminal coupling portion 34 of the cell terminal 30. In this case, the second current collector 60 and the terminal coupling portion 34 may be coupled by welding. The second current collector 60 may be interposed between the second uncoated portion 12a of the electrode assembly 10 and the cell terminal 30, thereby electrically connecting the second uncoated portion 12a of the electrode assembly 10 and the cell terminal 30.

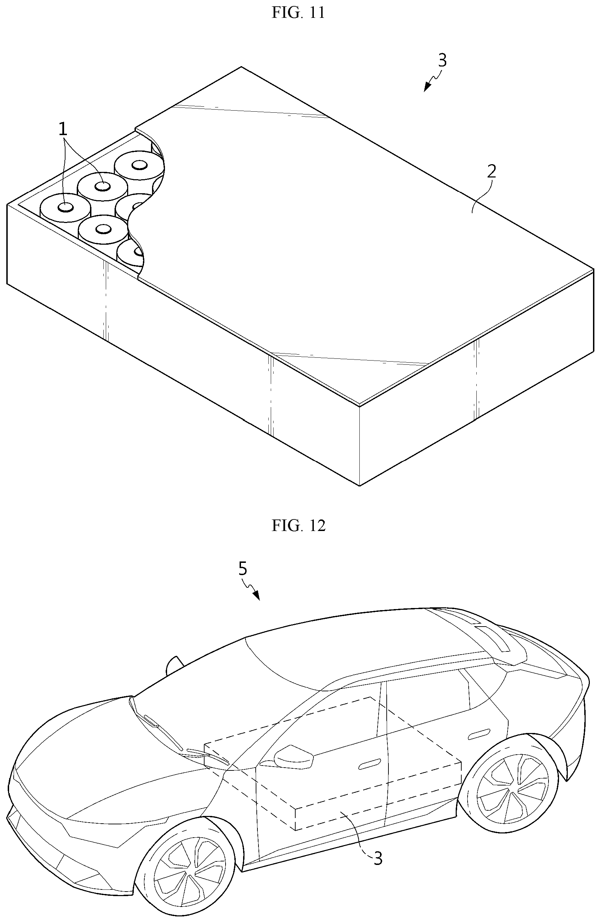

FIG. 11 is a drawing illustrating a battery pack including a battery cell 1 according to an embodiment of the present disclosure.

Referring to FIG. 11, a battery pack 3 according to an embodiment of the present disclosure includes a battery assembly in which a plurality of battery cells 1 are electrically connected according to an embodiment of the present disclosure described above, and a pack housing 2 storing the same. In the drawing of the present disclosure, components such as a busbar for electrical connection, a cooling unit, and a power terminal have been omitted for convenience of illustration. In addition, the battery pack 3 may further include various components, such as components of the battery pack 3 known at the time of filing of the present disclosure, such as a BMS, a pack case, a relay, a current sensor, and the like.

FIG. 12 is a drawing illustrating a vehicle including the battery pack 3 in FIG. 11.

Referring to FIG. 12, a vehicle 5 according to an embodiment of the present disclosure may be, for example, an electric vehicle, a hybrid vehicle, or a plug-in hybrid vehicle, and includes a battery pack 3 according to an embodiment of the present disclosure. The vehicle 5 includes a four-wheeled vehicle and a two-wheeled vehicle. The vehicle 5 operates by power supplied from the battery pack 3 according to an embodiment of the present disclosure. In addition, the vehicle 5 according to the present disclosure may further include various other components included in the vehicle, in addition to the battery cells 1 or the battery pack 3. For example, the vehicle 5 according to the present disclosure may further include a car body, a motor, and a control device, such as an electronic control unit (ECU), in addition to the battery cell 1 according to the present disclosure.

Meanwhile, although terms indicating directions such as up(ward) and down(ward) are used in this specification, it is obvious to those skilled in the art to which the present disclosure pertains that these terms are only for convenience of explanation with reference the relevant drawings and may vary depending on the position of the target object or the position of the observer.

As described above, although the present disclosure has been described with reference to limited embodiments and drawings, the present disclosure is not limited thereto, and various modifications and variations are possible without departing from the technical idea of the present disclosure and the scope of equivalence of the claims to be described below by those skilled in the art to which the present disclosure pertains.

### [Description of Reference numerals]

5: Vehicle
3: Battery pack
2: Pack housing
1: Battery cell
10: Electrode assembly
11: First electrode
11a: First uncoated portion
11b: First electrode active material
11c: First segment
12: Second electrode
12a: Second uncoated portion
12b: Second electrode active material
12c: Second segment
C: Winding center
20: Battery housing
21: Upper cover
30: Cell terminal
31: Exposed terminal portion
32: Inserted terminal portion
33: Terminal connecting portion
34: Terminal coupling portion
40: Insulating gasket
41: Exposed gasket portion
42: Inserted gasket portion
50: First current collector
60: Second current collector
80: Lead tab

## Claims

1. A battery cell comprising:
an electrode assembly configured by winding a first electrode and a second electrode with a separator interposed therebetween around a winding axis to define a core and an outer surface, the first electrode comprising a first uncoated portion on which an active material layer is not coated along a winding direction, the second electrode comprising a second uncoated portion on which an active material layer is not coated along the winding direction, and the first uncoated portion and the second uncoated portion being provided on the same surface of the electrode assembly;
a battery housing having an opening formed on one side and configured to receive the electrode assembly through the opening;
an upper cover configured to cover the opening of the battery housing; and
a cell terminal passing through the upper cover to be exposed to an outside of the upper cover, electrically connected to the second uncoated portion, and configured to be weldable to the second uncoated portion from an outside.

2. The battery cell according to claim 1,
wherein the first uncoated portion and the second uncoated portion are provided at an upper portion of the electrode assembly in a height direction thereof.

3. The battery cell according to claim 1,
wherein the first uncoated portion is electrically connected to the upper cover.

4. The battery cell according to claim 1,
wherein the first uncoated portion and the upper cover are coupled by welding to form a weld, and
wherein the weld is formed in an area of the upper cover, excluding an area occupied by the cell terminal.

5. The battery cell according to claim 1,
wherein the cell terminal is located on one side relative to the center of the upper cover.

6. The battery cell according to claim 1,
wherein at least a portion of the first uncoated portion comprises a plurality of first segments divided along a winding direction of the electrode assembly,
wherein at least a portion of the second uncoated portion comprises a plurality of second segments divided along the winding direction of the electrode assembly, and
wherein the first segments and the second segments are disposed at positions that do not overlap each other along the winding direction.

7. The battery cell according to claim 6,
wherein the first segments and the second segments are spatially separated.

8. The battery cell according to claim 6,
wherein the electrode assembly comprises:
a first segment area defined as a bending surface area where the plurality of first segments are bent radially; and
a second segment area defined as a bending surface area where the plurality of second segments are bent radially.

9. The battery cell according to claim 8,
wherein the first segment area is provided on one side of an upper surface of the electrode assembly, and
wherein the second segment area is provided on the other side of the upper surface of the electrode assembly, which is spaced apart from the one side.

10. The battery cell according to claim 8,
wherein the first segment area and the second segment area are each provided in a semicircular ring shape.

11. The battery cell according to claim 8,
wherein the first segment area and the second segment area are radially disposed on the electrode assembly.

12. The battery cell according to claim 8,
wherein the first segment area and the second segment area are alternately disposed on the electrode assembly.

13. The battery cell according to claim 8,
wherein the first segment area and the second segment area are arranged in a fan shape.

14. A battery pack comprising at least one battery cell according to any one of claims 1 to 13.

15. A vehicle comprising at least one battery pack according to claim 14.
